# EUROPEAN PATENT APPLICATION

(11) **EP 4 729 301 A1**
(43) Date of publication of application: **22.04.2026**
(21) Application number: 25204936.6
(22) Date of filing: 26.09.2025
(51) Int. Cl.: B41J 2/21, G06K 15/02, B41M 7/00

(54) **IMAGE FORMATION DEVICE, IMAGE FORMATION METHOD, AND IMAGE FORMATION PROGRAM**

(30) Priority: 30.09.2024 JP 2024170541
(71) Applicant: Brother Kogyo Kabushiki Kaisha, Nagoya, Aichi 467-8561 (JP)
(72) Inventor: MIZUNO, Nao, Nagoya, 467-8562 (JP); HAYASHI, Fusuke, Nagoya, 467-8562 (JP); MACHII, Sota, Nagoya, 467-8562 (JP); KATO, Ryuji, Nagoya, 467-8562 (JP); MIWA, Hitomi, Nagoya, 467-8562 (JP)
(74) Representative: J A Kemp LLP

(57) **Abstract**

An image formation device (21) forms an ink layer (L1) on a film (F). The ink layer is configured to be transferred to a print medium (M). The image formation device (21) includes a color head (4) configured to eject color ink, a shielding head (5) configured to eject shielding ink, and a processor (91). The processor (91) forms a color layer (L11) on the film (F) by ejecting the color ink from the color head (4) onto the film (F). The color layer (L11) is the ink layer (L1) configured by the color ink and constituting an image. The processor (91) forms a shielding layer (L13, L15) by ejecting the shielding ink from the shielding head (5) onto the color layer (L11), in the film (F) on which the color layer (L11) is formed. The shielding layer (L13, L15) is the ink layer (L1) configured by the shielding ink.

## Description

### Technical Field

The present invention relates to an image formation device, an image formation method, and an image formation program.

### Background Art

In an image formation method disclosed in Japanese Patent Publication No. 2009-66789, an image is formed on an intermediate transfer recording medium by an inkjet method. The intermediate transfer recording medium on which the image is formed is overlaid on a print medium. The print medium is heated in a state of the intermediate transfer recording medium being overlaid thereon. In this way, the image is transferred from the intermediate transfer recording medium to the print medium.

### Summary of Invention

In the above-described image formation method, the print medium is heated when the image is transferred from the intermediate transfer recording medium to the print medium. In this case, so-called sublimation migration may occur in which a dye contained in the print medium migrates from the print medium to the transfer image due to the heat. When the dye migrates to the transfer image, the dye may be noticeable in the transfer image, and a quality of the transfer image may deteriorate.

Embodiments of the broad principles derived herein provide an image formation device, an image formation method, and an image formation program that contribute to suppressing a deterioration in quality of an image transferred to a print medium.

A first aspect of the present invention relates to an image formation device configured to form an ink layer on a film. The ink layer is configured to be transferred to a print medium. The image formation device includes a color head configured to eject color ink, a shielding head configured to eject shielding ink, and a processor. The processor is configured to form a color layer on the film by ejecting the color ink from the color head onto the film. The color layer is the ink layer configured by the color ink and constituting an image. The processor is configured to form a shielding layer by ejecting the shielding ink from the shielding head onto the color layer, in the film on which the color layer is formed. The shielding layer is the ink layer configured by the shielding ink.

According to the first aspect, the shielding layer is present on the color layer in the film. When the ink layer is transferred from the film to the print medium in this state, for example, a distance from the print medium to the color layer is longer by an amount corresponding to at least the shielding layer. Thus, when a dye is included in the print medium, the shielding layer suppresses the dye included in the print medium from reaching the color layer from the print medium as a result of sublimation migration. In this way, the shielding layer suppresses the dye from being noticeable in the color layer. Thus, the image formation device contributes to suppressing a deterioration in quality of the image transferred to the print medium.

In the first aspect, the shielding head may be configured to eject black ink as the shielding ink.

The shielding layer is formed by the black ink. Therefore, the shielding layer further suppresses the dye from being noticeable in the color layer. Thus, the image formation device further contributes to suppressing the deterioration in the quality of the image transferred to the print medium.

In the first aspect, the image formation device may include a white head configured to eject white ink. The processor may be configured to form a white layer by ejecting the white ink from the white head onto the color layer, in the film on which the color layer is formed. The white layer may be the ink layer configured by the white ink. The processor may be configured to form the shielding layer by ejecting the shielding ink from the shielding head onto the white layer, in the film on which the white layer is formed.

The white layer is present between the shielding layer and the color layer. Therefore, when the ink layer is transferred from the film to the print medium, the white layer suppresses color development of the color layer from deteriorating due to the shielding layer. Thus, the image formation device further contributes to suppressing the deterioration in the quality of the image transferred to the print medium.

In the first aspect, the processor may be configured to control the white head and the shielding head, and, in the film on which the color layer is formed, form a plurality of unit sets on the color layer. A single unit set of the plurality of unit sets may be a set of the white layer and the shielding layer.

In the film, the plurality of unit sets are present on the color layer. When the ink layer is transferred from the film to the print medium in this state, for example, the distance from the print medium to the color layer is longer by an amount corresponding to at least the plurality of unit sets. Thus, when the dye is included in the print medium, the plurality of unit sets suppress the dye included in the print medium from reaching the color layer from the print medium as a result of the sublimation migration. In this way, the plurality of unit sets suppress the dye from being noticeable in the color layer. Thus, the image formation device further contributes to suppressing the deterioration in the quality of the image transferred to the print medium.

In the first aspect, the processor may be configured to eject, from the shielding head, the shielding ink of an amount corresponding to an amount of the white ink ejected by the white head.

The image formation device contributes to changing the thickness of the shielding layer in accordance with a thickness of the white layer, for example.

In the first aspect, the processor may be configured to eject, from the shielding head, the shielding ink of an amount corresponding to a type of the film.

The image formation device contributes to forming the shielding layer of a thickness suited to the type of the film.

In the first aspect, the processor may be configured to eject, from the shielding head, the shielding ink of an amount corresponding to a temperature, a pressure, or a time period set in a transfer process. The transfer process may be a process of transferring the image from the film to the print medium.

The image formation device contributes to forming the shielding layer of a thickness suited to the temperature, the pressure, or the time period in the transfer process.

In the first aspect, the processor may be configured to eject, from the shielding head, the shielding ink of an amount corresponding to a type of the print medium onto which the image is to be transferred from the film.

The image formation device contributes to forming the shielding layer of a thickness suited to the type of the print medium.

In the first aspect, the processor may be configured to eject, from the shielding head, the shielding ink of an amount corresponding to a set value specified by a user.

The image formation device contributes to forming the shielding layer in accordance with the quality of the image intended by a user, for example.

In the first aspect, the processor may be configured to eject the shielding ink from the shielding head onto a region matching a color region formed by the color layer, a region matching a white region formed by the white layer, or a region inside either one of the color region or the white region.

The shielding layer is suppressed from extending beyond the color layer or the white layer. Thus, the image formation device further contributes to suppressing the deterioration in the quality of the image transferred to the print medium.

In the first aspect, in the film in which the color layer is formed, the processor may be configured to form the shielding layer by ejecting the shielding ink from the shielding head onto the color layer. The shielding layer may be a complementary color of a color of the print medium onto which the image is to be transferred from the film.

The shielding layer is the complementary color. Therefore, the shielding layer further suppresses the dye from being noticeable in the color layer. Thus, the image formation device further contributes to suppressing the deterioration in the quality of the image transferred to the print medium.

In the first aspect, the processor may be configured to perform a color scan of scanning while ejecting the color ink from the color head and a white scan of scanning while ejecting the white ink from the white head in parallel with each other, a shielding scan of scanning while ejecting the shielding ink from the shielding head and the white scan in parallel with each other, or the color scan, the shielding scan, and the white scan in parallel with each other.

The color scan, the shielding scan, and the white scan are executed over a shorter time period, compared to when the white scan is performed separately from both the color scan and the shielding scan. Thus, the image formation device contributes to suppressing the deterioration in the quality of the image transferred to the print medium, while suppressing a deterioration in productivity.

In the first aspect, the image formation device may include a heat platen configured to have the film placed thereon. The heat platen includes a heater. The processor may be configured to form the color layer on the film by ejecting the color ink from the color head, onto the film placed on the heat platen heated by the heater, The processor may be configured to form the shielding layer by ejecting the shielding ink from the shielding head onto the color layer, in the film which is placed on the heat platen heated by the heater and on which the color layer is formed.

The image formation device further contributes to suppressing the deterioration in the quality of the image transferred to the print medium.

A second aspect of the present invention relates to an image formation method for forming an ink layer on a film. The ink layer is configured to be transferred to a print medium. The image formation method includes forming a color layer on the film by ejecting color ink from a color head onto the film. The color head is configured to eject the color ink. The color layer is the ink layer configured by the color ink and constituting an image. The image formation method includes forming a shielding layer by ejecting shielding ink from a shielding head onto the color layer, in the film on which the color layer is formed. The shielding head is configured to eject the shielding ink. The shielding layer is the ink layer configured by the shielding ink.

The second aspect contributes to the same advantages as the first aspect.

A third aspect of the present invention relates to an image formation program for forming an ink layer on a film. The ink layer is configured to be transferred to a print medium. The image formation program, when executed by a computer, causes the computer to perform processes. The processes include forming a color layer on the film by ejecting color ink from a color head onto the film. The color head is configured to eject the color ink. The color layer is the ink layer configured by the color ink and constituting an image. The processes include forming a shielding layer by ejecting shielding ink from a shielding head onto the color layer, in the film on which the color layer is formed. The shielding head is configured to eject the shielding ink. The shielding layer is the ink layer configured by the shielding ink.

The third aspect contributes to the same advantages as the first aspect.

### Brief Description of Drawings

FIG. 1 is a diagram illustrating a print system 100.
FIG. 2 is a flowchart illustrating a DTF printing.
FIG. 3 is a cross-sectional view illustrating a process from a film F to the creation of a printed product G in DTF printing.
FIG. 4 is a schematic plan view of a printer 21.
FIG. 5 a schematic right side view of the printer 21.
FIG. 6 is a block diagram illustrating an electrical configuration of the printer 21.
FIG. 7 is a flowchart illustrating a main process.
FIG. 8 is a plan view of the film F.
FIG. 9 is a cross-sectional view of the printed product G.

### Description of Embodiments

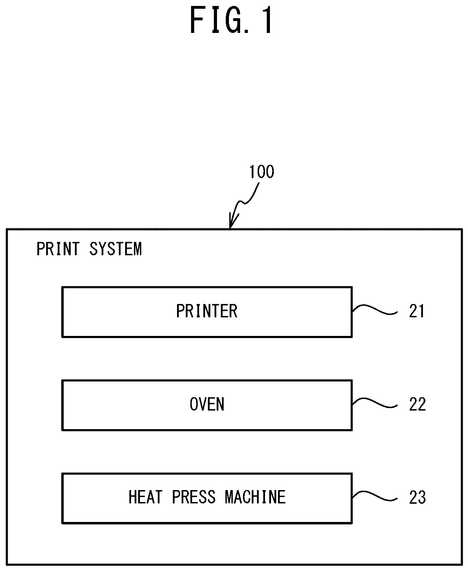

A print system 100 according to an embodiment of the present invention will be described with reference to the drawings. As shown in FIG. 1, the print system 100 includes a printer 21, an oven 22, and a heat press machine 23.

As will be described in detail later, the printer 21 is an inkjet printer. The printer 21 ejects white ink, color ink, and shielding ink.

The white ink is a white-colored ink. The white ink includes a pigment, for example. The pigment is titanium oxide, for example.

The color ink is an ink having a color different from the white ink. The color of the color ink is not particularly limited. In the present embodiment, the color inks are inks of each of the following colors, namely, cyan, magenta, yellow, and black.

The shielding ink is an ink having a color different from the white ink. In the present embodiment, the shielding ink is a black-colored ink. In other words, the shielding ink is black ink. The black color of the shielding ink may be the same as the black color of the color ink. The black color of the shielding ink may be different from the black color of the color ink.

The shielding ink is an ink used for suppressing sublimation migration. For example, a ratio of a component that suppresses the sublimation migration contained in the shielding ink is higher than a ratio of the component that suppresses the sublimation migration contained in the white ink. Alternatively, a ratio of a component that boosts the sublimation migration contained in the shielding ink is lower than a ratio of the component that boosts the sublimation migration contained in the white ink. The component that suppresses the sublimation migration is, for example, melamine that forms a crosslinked resin membrane in a baking process (S3) or a transfer process (S4).

Hereinafter, when the white ink, the color ink, or the shielding ink are not particularly specified, or when they are collectively referred to, they will simply be referred to as "ink" or "inks". The ink may include a pigment or need not necessarily include a pigment.

In the present embodiment, the ink includes a pigment and an organic solvent. The pigment is a coloring agent. The organic solvent can function, for example, as a humectant that suppresses drying out of water based ink at a tip end of a nozzle of a head 10 to be described later. The ink may contain other components.

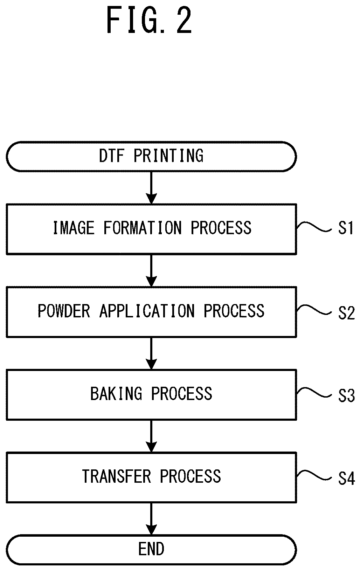

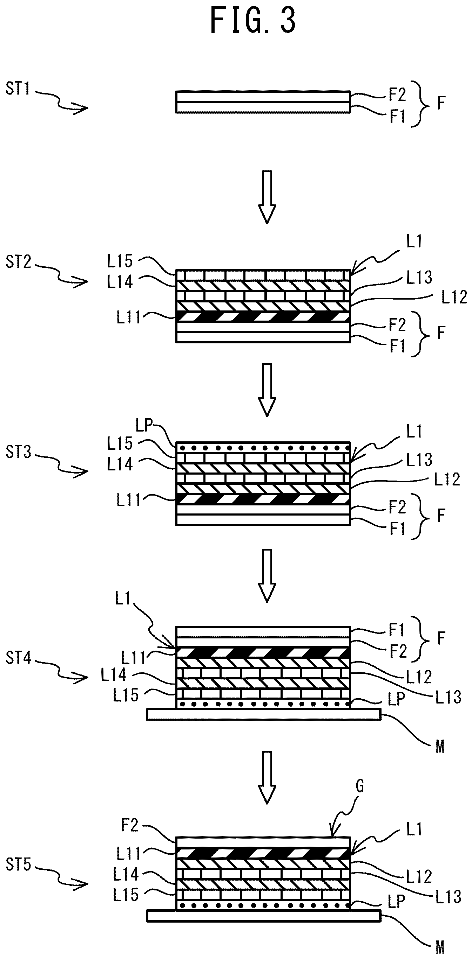

In the print system 100, DTF printing shown in FIG. 2 is performed by the printer 21, the oven 22, and the heat press machine 23. The DTF printing is Direct To Film printing. The DTF printing is a type of printing method for forming a color image on a print medium M shown in FIG. 3. The print medium M is, for example, cloth or paper. The print medium M is a T-shirt, for example.

The DTF printing will be described with reference to FIG. 2 and FIG. 3. As shown in FIG. 2, the DTF printing includes an image formation process (S1), a powder application process (S2), the baking process (S3), and the transfer process (S4). The image formation process (S1), the powder application process (S2), the baking process (S3), and the transfer process (S4) are performed in the order of the image formation process (S1), the powder application process (S2), the baking process (S3), and the transfer process (S4). As shown in FIG. 3, in the DTF printing, a state shifts in the order of states ST1, ST2, ST3, ST4, and ST5.

As shown by the state ST1 in FIG. 3, a film F is used in the DTF printing. The film F has a thin membrane shape. The film F includes a base material F1 and a receiving layer F2.

The base material F1 is thin paper, or is a plastic film. The base material F1 may be a composite film of the thin paper and the plastic film.

The receiving layer F2 is laminated on the base material F1. The receiving layer F2 includes a component for coagulating the ink. The component for coagulating the ink is a polyvalent metal salt, for example. The receiving layer F2 may further include a cationic urethane-based resin, a cationic dye-fixing agent, and a filler.

The receiving layer F2 has visible light transparency. Further, the receiving layer F2 coagulates the ink coated on the receiving layer F2. In this way, an ink layer L1 to be described later is fixed to the receiving layer F2.

Although not shown in the drawings, the film F may include a release layer between the base material F1 and the receiving layer F2. Note that FIG. 3 does not show an actual thickness relationship of each of the layers. For example, the thickness of the base material F1 may be thicker than the thickness of the receiving layer F2. The thickness of the base material F1 may be thinner than the thickness of the receiving layer F2.

As shown by the state ST2 in FIG. 3, in the image formation process (S1) shown in FIG. 2, the printer 21 shown in FIG. 1 ejects the ink onto the receiving layer F2 of the film F. In the present embodiment, the printer 21 ejects the white ink, the color ink, and the shielding ink. In this way, the printer 21 shown in FIG. 1 forms the ink layer L1 on the receiving layer F2 of the film F. Note that, in the state ST2, the ink layer L1 on the receiving layer F2 is shown. By fixing the ink layer L1 to the receiving layer F2, the receiving layer F2 and the ink layer L1 may be integrated.

The ink layer L1 is configured by the ink. In the present embodiment, the ink layer L1 includes a color layer L11, a white layer L12, a shielding layer L13, a white layer L14, and a shielding layer L15. The color layer L11, the white layer L12, the shielding layer L13, the white layer L14, and the shielding layer L15 are arranged upward from the receiving layer F2 in the order of the color layer L11, the white layer L12, the shielding layer L13, the white layer L14, and the shielding layer L15. Note that, in the state ST2, upward is the direction in which the receiving layer F2 is laminated on the base material F1.

Hereinafter, the white layer and the shielding layer laminated on the white layer are assumed to be a single unit set. In the state ST2 shown in FIG. 3, the white layer L12 and the shielding layer L13 are equivalent to the single unit set. The white layer L14 and the shielding layer L15 are equivalent to the single unit set. In other words, in the state ST2 shown in FIG. 3, the two unit sets are formed on the color layer L11.

The color layer L11 is configured by the color ink. The color layer L11 configures the color image. The color layer L11 may include the white ink that configures a white-colored portion in the color image.

The white layers L12 and L14 are respectively configured by the white ink. The white layers L12 and L14 configure an under base of the color image.

The shielding layers L13 and L15 are respectively configured by the shielding ink. Each of the shielding layers L13 and L15 has a function of suppressing a deterioration in the quality of the color image transferred onto the print medium M.

As shown by the state ST3 in FIG. 3, in the powder application process (S2) shown in FIG. 2, in the film F in which the ink layer L1 is formed, an operator or an application device applies a powder onto the ink layer L1. In this way, a powder layer LP is formed on the ink layer L1. The powder layer LP is configured by the powder.

The powder is configured by thermoplastic polyurethane, for example. The powder layer LP is interposed between the ink layer L1 and the print medium M in the transfer process (S4) to be described later, and improves fixity of the ink layer L1 to the print medium M. The powder layer LP functions as an adhesive layer.

In the baking process (S3) shown in FIG. 2, the film F in which the powder layer LP is formed on the ink layer L1 is baked in the oven 22 shown in FIG. 1. In this way, the powder layer LP melts.

As shown by the state ST4 in FIG. 3, the film F in which the ink layer L1 and the powder layer LP are laminated is vertically inverted from the state shown in the state ST3, and is placed on the print medium M in the vertically inverted state. In the transfer process (S4) shown in FIG. 2, the film F and the print medium M are heat pressed from above and below by the heat press machine 23 shown in FIG. 1, with the ink layer L1 interposed between the film F and the print medium M. In this way, the ink layer L1 is transferred from the film F to the print medium M. The image is transferred from the film F to the print medium M.

A heating temperature by the heat press machine 23 is approximately 180°C, for example. The heating temperature by the heat press machine 23 is not limited to a specific temperature, but is preferably 110°C or above.

As shown by the state ST5 in FIG. 3, a user peels the base material F1 from the print medium M. In this way, the user obtains the print medium M on which the color layer L11 is formed, as a printed product G. In other words, the user obtains the print medium M on which the color image is formed, as the printed product G.

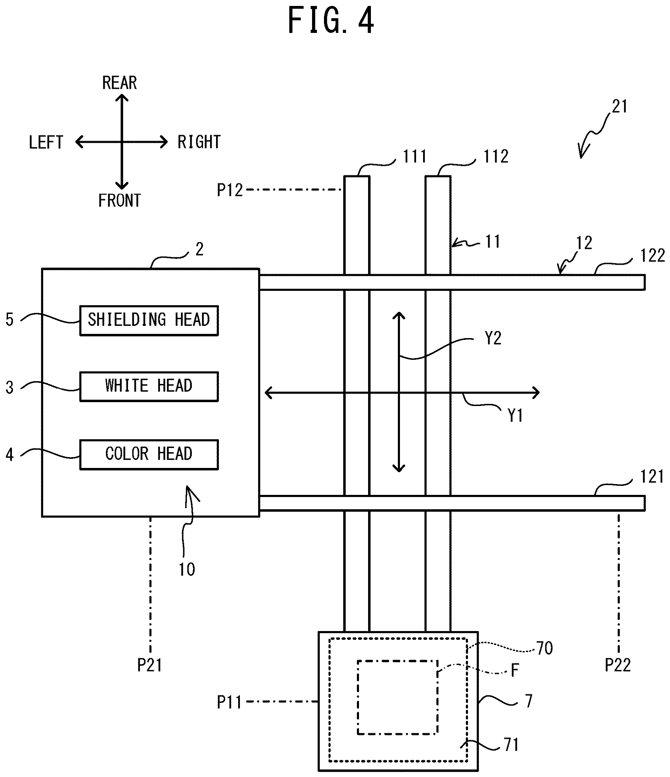

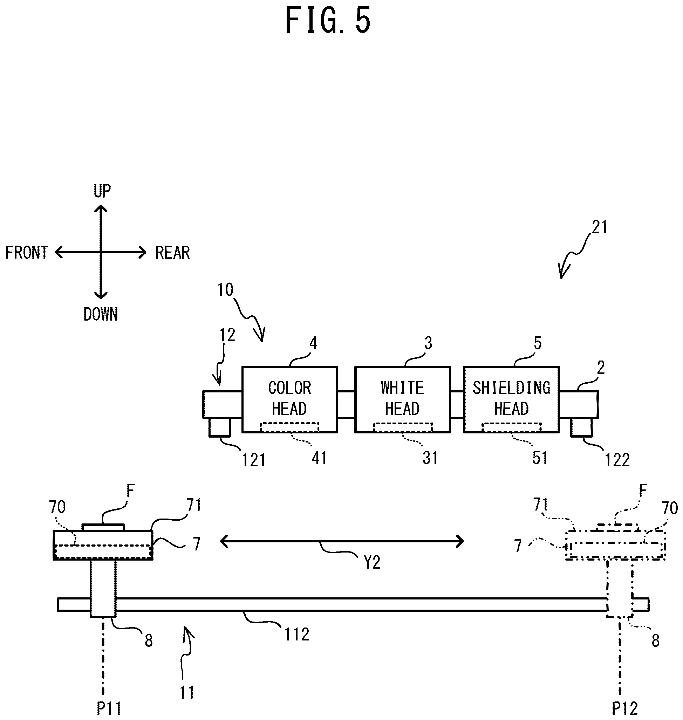

An overall configuration of the printer 21 will be described with reference to FIG. 4 and FIG. 5. The leftward direction, the rightward direction, the downward direction, and the upward direction in FIG. 4 are, respectively, the leftward direction, the rightward direction, the forward direction, and the rearward direction of the printer 21. The leftward direction, the rightward direction, the downward direction, and the upward direction in FIG. 5 are, respectively, the forward direction, the rearward direction, the downward direction, and the upward direction of the printer 21.

The printer 21 includes a platen conveyance mechanism 11, a platen 7, a head conveyance mechanism 12, and a plurality of the heads 10.

The platen conveyance mechanism 11 includes guide rails 111 and 112, and a support base 8. Each of the guide rails 111 and 112 extends in the front-rear direction. The guide rails 111 and 112 are arranged next to each other in the left-right direction. The guide rails 111 and 112 are fixed to a frame (not shown in the drawings) of the printer 21.

The support base 8 is supported by the guide rails 111 and 112. The support base 8 moves in the front-rear direction along the guide rails 111 and 112.

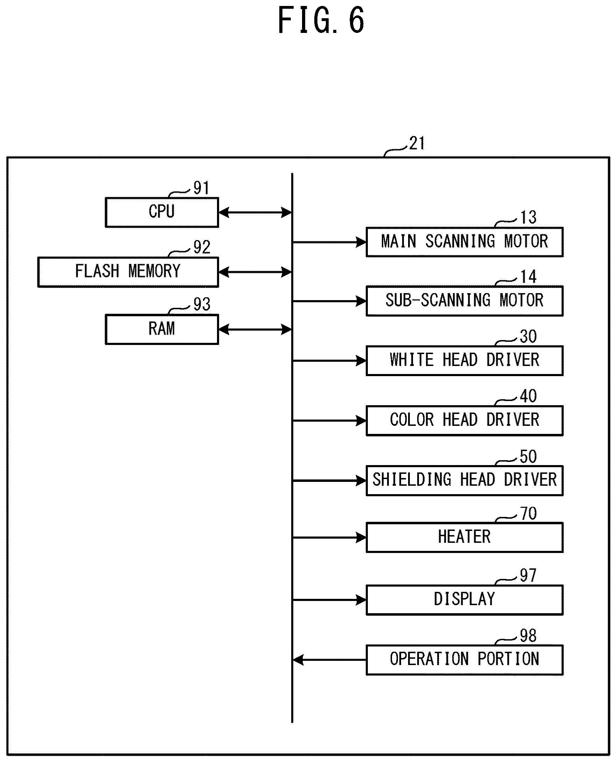

The platen 7 is mounted on the upper end of the support base 8. As shown by an arrow Y2, the platen conveyance mechanism 11 conveys the platen 7 in the front-rear direction, by driving of a sub-scanning motor 14 shown in FIG. 6. Thus, the front-rear direction of the printer 21 is a sub-scanning direction.

The platen 7 has a plate shape. The platen 7 extends in the front-rear direction and the left-right direction. A placement surface 71 is formed on the upper surface of the platen 7. The film F is placed on the placement surface 71 in a state in which the base material F1 of the film F is oriented downward and the receiving layer F2 is oriented upward. In this way, the film F is set on the platen 7.

In the present embodiment, the platen 7 is a heat platen. That is, the platen 7 includes a heater 70. The heater 70 includes a heating resistor. In the present embodiment, the heater 70 is a heating wire. The heater 70 is spread over the lower surface of the platen 7.

Note that the heater 70 may be spread over the placement surface 71. The heater 70 may be spread through the interior of the platen 7.

The heater 70 generates heat as a result of being energized, and heats the platen 7. In the state in which the film F is set on the platen 7, the heater 70 heats the film F via the platen 7.

The head conveyance mechanism 12 includes guide rails 121 and 122, and a carriage 2. Each of the guide rails 121 and 122 extends in the left-right direction. The guide rails 121 and 122 are arranged next to each other in the front-rear direction. The guide rails 121 and 122 are fixed to the frame (not shown in the drawings) of the printer 21.

The carriage 2 has a plate shape. The carriage 2 extends in the front-rear direction and the left-right direction. The carriage 2 is supported by the guide rails 121 and 122. The carriage 2 moves in the left-right direction along the guide rails 121 and 122.

The plurality of heads 10 are mounted on the carriage 2. As shown by an arrow Y1, the head conveyance mechanism 12 conveys the plurality of heads 10 in the left-right direction by driving of a main scanning motor 13 shown in FIG. 6. Thus, the left-right direction of the printer 21 is a main scanning direction.

The plurality of heads 10 have a cuboid shape. In the present embodiment, the plurality of heads 10 include a white head 3, a color head 4, and a shielding head 5. The white head 3, the color head 4, and the shielding head 5 are arranged in a line in the order of the color head 4, the white head 3, and the shielding head 5 from the front toward the rear.

The lower surface of each of the white head 3, the color head 4, and the shielding head 5 is positioned higher than the placement surface 71 of the platen 7. The lower surface of each of the white head 3, the color head 4, and the shielding head 5 is exposed downward from an opening (not shown in the drawings) formed in the carriage 2.

A plurality of nozzles 31 are formed in the lower surface of the white head 3. The plurality of nozzles 31 are openings. The white ink is supplied to the white head 3 from a white ink container (not shown in the drawings). The white head 3 ejects the white ink downward from the plurality of nozzles 31. In the present embodiment, the "container" is a cartridge or a tank.

A plurality of nozzles 41 are formed in the lower surface of the color head 4. The plurality of nozzles 41 are openings. The color inks are supplied to the color head 4 from a plurality of color ink containers (not shown in the drawings). The color head 4 ejects the color inks downward from the plurality of nozzles 41.

A plurality of nozzles 51 are formed in the lower surface of the shielding head 5. The plurality of nozzles 51 are openings. The shielding ink is supplied to the shielding head 5 from a shielding ink container (not shown in the drawings). The shielding head 5 ejects the shielding ink downward from the plurality of nozzles 51.

When the shielding ink and the color ink are the same ink, a black ink container, of the color ink containers, and the shielding ink container may be a shared single container, or may be separate containers. In the case of the shared container, the shared container supplies the black ink to both the color head 4 and the shielding head 5. In the case of the separate containers, the black ink container supplies the black ink to the color head 4, and the shielding ink container supplies the black ink to the shielding head 5.

When the black color of the shielding ink and the black color of the color inks are different colors, the black ink container of the color ink containers and the shielding ink container are the separate containers. In this case, the black ink container supplies the black ink to the color head 4 as the color ink, and the shielding ink container supplies the black ink to the shielding head 5 as the shielding ink.

As shown in FIG. 5, the platen 7 is conveyed in the front-rear direction by the platen conveyance mechanism 11 between a front end position P11 and a rear end position P12. At the front end position P11, the platen 7 is disposed further to the front than the front ends of the plurality of heads 10. At the rear end position P12, the platen 7 is disposed further to the rear than the rear ends of the plurality of heads 10. For example, the film F is set on the platen 7 in a state in which the platen 7 is disposed at the front end position P11.

As shown in FIG. 4, the heads 10 are conveyed in the left-right direction by the head conveyance mechanism 12 between a left end position P21 and a right end position P22. At the left end position P21, the heads 10 are disposed further to the left than the left end of the platen 7. At the right end position P22, the heads 10 are disposed further to the right than the right end of the platen 7.

As shown by the arrow Y1 and the arrow Y2, in a plan view, a movement path of the plurality of heads 10 and a movement path of the platen 7 intersect each other. In a plan view, a region over which the movement path of the plurality of heads 10 and the movement path of the platen 7 intersect each other will be referred to as an "intersection region". When the plurality of heads 10 and the platen 7 are disposed in the intersection region, they are in a facing state of facing each other.

In the facing state, at least one of the lower surfaces of the plurality of heads 10 and the placement surface 71 of the platen 7 face each other in the vertical direction with the film F interposed therebetween. In the present embodiment, the at least one of the lower surfaces of the plurality of heads 10 is at least one of the lower surface of the white head 3, the lower surface of the color head 4, or the lower surface of the shielding head 5.

In the facing state, an operation of causing the head 10 to eject the ink while conveying the head 10 in the left-right direction will be referred to as a "ejection scan of the head 10". For example, an ejection scan that causes the white head 3 to eject the white ink from the nozzles 31 while conveying the white head 3 in the left-right direction in the facing state will be referred to as an "ejection scan of the white head 3". An operation of conveying the platen 7 in the front-rear direction will be referred to as a "sub-scan of the platen 7". By repeating the ejection scan of the head 10 and the sub-scan of the platen 7 by a predetermined amount, the printer 21 forms the ink layer L1 on the film F.

The electrical configuration of the printer 21 will be described with reference to FIG. 6. The printer 21 includes a CPU 91, a flash memory 92, and a RAM 93. The CPU 91, the flash memory 92, and the RAM 93 are electrically connected to each other. The CPU 91 controls the printer 21.

The flash memory 92 is a non-volatile memory. The flash memory 92 stores various information. For example, print data and programs are stored in the flash memory 92. The print data includes various information for the printer 21 to form the ink layer L1 shown in FIG. 3 on the film F.

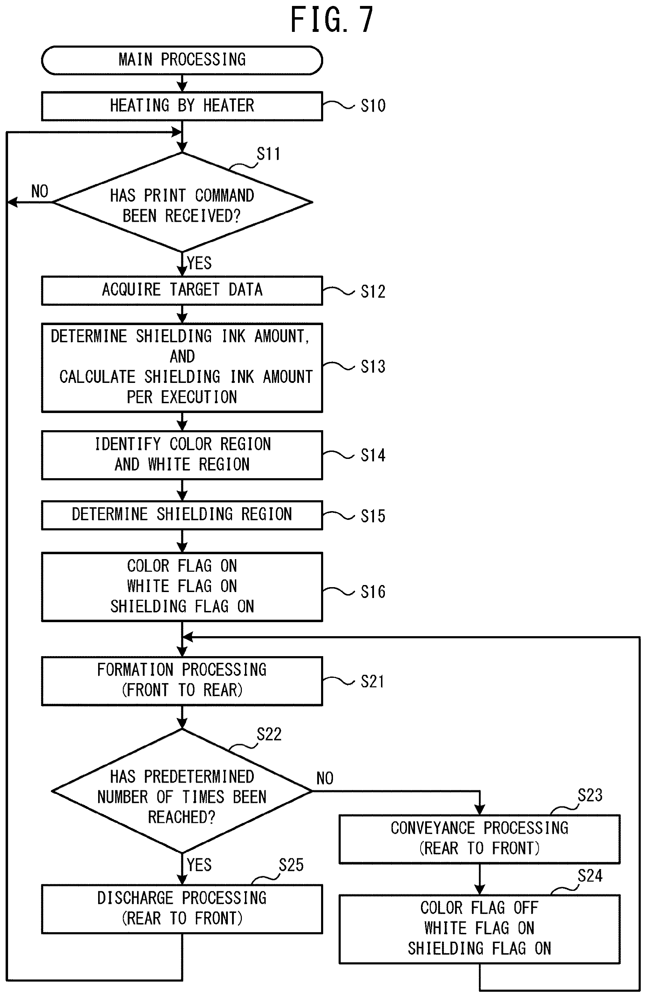

The programs consist of computer-readable commands. The programs are executed by the CPU 91. When the programs are executed by the CPU 91, the programs instruct the CPU 91 to perform various processing. The programs include a control program for executing main processing to be described later and shown in FIG. 7.

The RAM 93 temporarily stores data. For example, the data includes flags used in the main processing, information acquired, specified, calculated, or determined in the main processing.

The CPU 91 is electrically connected to the main scanning motor 13, the sub-scanning motor 14, a white head driver 30, a color head driver 40, a shielding head driver 50, and the heater 70. The main scanning motor 13 conveys the plurality of heads 10 in the left-right direction, together with the carriage 2, under the control of the CPU 91. The sub-scanning motor 14 conveys the platen 7 in the front-rear direction, together with the support base 8, under the control of the CPU 91.

The white head driver 30 is configured by a heating element or piezoelectric element, for example. The white head driver 30 is disposed corresponding to each of the plurality of nozzles 31. Under the control of the CPU 91, the white head drivers 30 selectively cause the white head 3 to eject the white ink from the plurality of nozzles 31.

The color head driver 40 is configured by a heating element or piezoelectric element, for example. The color head driver 40 is disposed corresponding to each of the plurality of nozzles 41. Under the control of the CPU 91, the color head drivers 40 selectively cause the color head 4 to eject the color ink from the plurality of nozzles 41.

The shielding head driver 50 is configured by a heating element or piezoelectric element, for example. The shielding head driver 50 is disposed corresponding to each of the plurality of nozzles 51. Under the control of the CPU 91, the shielding head drivers 50 selectively cause the shielding head 5 to eject the shielding ink from the plurality of nozzles 51.

The heater 70 generates heat under the control of the CPU 91.

A display 97 and an operation portion 98 are further electrically connected to the CPU 91. The display 97 displays various types of screen under the control of the CPU 91.

The operation portion 98 is a user interface. The operation portion 98 is a button, or a touch panel, for example. The operation portion 98 outputs signals, to the CPU 91, that accord with operations by the user. For example, the operation portion 98 receives a print start operation.

The print start operation is an operation performed by the user. The print start operation is an operation for inputting, to the printer 21, a print command for performing printing by the printer 21, based on the print data. The print command specifies the print data of a control target.

The main processing will be described with reference to FIG. 7. The main processing is executed in the image formation process (S1) shown in FIG. 2. When a power source of the printer 21 is turned on, the CPU 91 starts the main processing by reading out and operating the control program from the flash memory 92.

In the present embodiment, the main processing is started in a state in which the platen 7 is disposed at the front end position P11 shown in FIG. 4 and FIG. 5. The main processing is started in a state in which the heads 10 are disposed at the left end position P21 or at the right end position P22 shown in FIG. 4. Hereinafter, an example will be described in which the ink layer L1 shown by the state ST2 in FIG. 3 is formed on the film F.

When the main processing is started, the CPU 91 causes the heater 70 shown in FIG. 5 to generate heat (S10). In this way, the platen 7 is heated. The heating temperature of the heater 70 is not limited to a specific temperature, and is preferably in a range from 30°C to 60°C.

The CPU 91 determines whether the print command has been received via the operation portion 98 shown in FIG. 6 (S11). For example, the user performs the print start operation on the operation portion 98 in the state in which the film F is set on the platen 7 shown in FIG. 4, and inputs the print command to the printer 21.

When the print command has not been received (no at S11), the CPU 91 returns the processing to the determination at S11. When the print command has been received (yes at S11), the CPU 91 acquires target data, from the print data specified by the print command (S12).

In the present embodiment, the print data includes the target data. The target data indicates a white ink amount. The white ink amount is a total amount of the white ink ejected from the white head 3 shown in FIG. 4 and FIG. 5 when formation processing (S21) to be described later is performed a predetermined number of times. For example, when a white-colored portion is included in the color image to be printed, an amount of the white ink configuring the white-colored portion of the color image need not necessarily be included in the white ink amount. In the present embodiment, irrespective of whether the white-colored portion is included in the color image or not, the white ink amount is the total amount of the white ink configuring the white layers L12 and L14.

The CPU 91 determines a shielding ink amount based on the target data acquired by the processing at S12 (S13). In other words, in the present embodiment, based on the white ink amount, the CPU 91 determines, as the shielding ink amount, an amount corresponding to the white ink amount (S13).

The shielding ink amount is a total amount of the shielding ink ejected from the shielding head 5 shown in FIG. 4 and FIG. 5 when the formation processing (S21) to be described later is performed the predetermined number of times. In other words, the shielding ink amount is the total amount of the shielding ink configuring the shielding layers formed on the film F. In the example shown in FIG. 3, the shielding ink amount is the total amount of the shielding ink configuring the shielding layers L13 and L15.

In the present embodiment, in the processing at S13, the CPU 91 determines the shielding ink amount such that the shielding ink amount increases the smaller the white ink amount becomes. For example, a second white ink amount is smaller than a first white ink amount. A second shielding ink amount is greater than a first shielding ink amount. In the present embodiment, when the white ink amount is the first white ink amount, the CPU 91 determines the shielding ink amount to be the first shielding ink amount. When the white ink amount is the second white ink amount, the CPU 91 determines the shielding ink amount to be the second shielding ink amount.

The CPU 91 may calculate the shielding ink amount using a formula, or may determine the shielding ink amount using a table.

The CPU 91 calculates the shielding ink amount (S13) per execution of the formation processing (S21). In the present embodiment, the CPU 91 takes the shielding ink amount per execution of the formation processing to be an amount obtained by dividing the shielding ink amount by the predetermined number of times. In the example shown in FIG. 3, the shielding ink amount per execution of the formation processing is the amount of the shielding ink configuring the shielding layer L13, and is equivalent to the amount of the shielding ink configuring the shielding layer L15. Note that the shielding ink amount per execution of the formation processing may be different between the shielding layer L13 and the shielding layer L15.

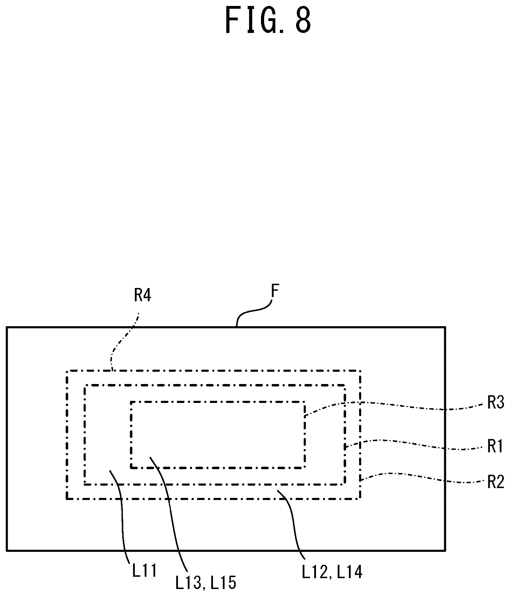

The CPU 91 identifies a color region R1 and a white region R2 (S14) shown in FIG. 8, from the print data specified by the print command.

As shown in FIG. 8, the color region R1 is a region of the film F in which the color image is formed. In other words, the color region R1 is a region of the film F in which the color layer L11 is formed. The white region R2 is a region of the film F on which the underbase is formed. In other words, the white region R2 is a region of the film F in which the white layers L12 and L14 are formed.

All or part of the color region R1 overlaps the white region R2 in a plan view. When all of the color region R1 overlaps the white region R2 in a plan view, the color region R1 may match the white region R2, or may be disposed inside the white region R2.

All or part of the white region R2 overlaps with the color region R1 in a plan view. When all of the white region R2 overlaps the color region R1 in a plan view, the white region R2 may match the color region R1, or may be disposed inside the color region R1.

In the example shown in FIG. 8, all of the color region R1 overlaps part of the white region R2 in a plan view. In other words, the color region R1 is disposed inside the white region R2 in a plan view.

In the present embodiment, the print data includes image data. The image data represents an image. The image includes the color image and the underbase. In processing at S14, the CPU 91 identifies the color region R1 and the white region R2 based on the image data.

As shown in FIG. 7, based on the color region R1 and the white region R2 identified by the processing at S14, the CPU 91 determines a shielding region R3 (S15). For example, the CPU 91 identifies a projection region R4, based on the color region R1 and the white region R2. The projection region R4 is a region onto which the color region R1 and the white region R2 are projected in a plan view. In the example shown in FIG. 8, since all of the color region R1 overlaps the white region R2 in a plan view, the projection region R4 matches the white region R2 in a plan view.

Although not shown in the drawings, when all of the white region R2 overlaps the color region R1 in a plan view, the projection region R4 matches the color region R1 in a plan view.

When part of the color region R1 overlaps part of the white region R2 in a plan view, the projection region R4 is configured by a color non-overlapping region, a white non-overlapping region, and an overlapping region. The color non-overlapping region is a portion of the color region R1 that does not overlap the white region R2 in a plan view. The white non-overlapping region is a portion of the white region R2 that does not overlap the color region R1 in a plan view. The overlapping region is a portion in which the color region R1 and the white region R2 overlap each other.

All of the shielding region R3 overlaps the projection region R4 in a plan view. In other words, in processing at S15, the CPU 91 determines the shielding region R3 such that all of the shielding region R3 overlaps the projection region R4 in a plan view. In this case, the shielding region R3 may match the projection region R4 in a plan view, or may be disposed inside the projection region R4. In other words, the shielding region R3 is a region matching the color region R1, a region matching the white region R2, or a region inside either the color region R1 or the white region R2. It is sufficient that the shielding region R3 does not extend beyond the projection region R4 in a plan view.

In the example shown in FIG. 8, the shielding region R3 is disposed inside the projection region R4 in a plan view.

The CPU 91 turns ON a white flag in the RAM 93 (S16). The CPU 91 turns ON a color flag in the RAM 93 (S16). The CPU 91 turns ON a shielding flag in the RAM 93 (S16). The white flag, the color flag, and the shielding flag are stored in the RAM 93.

Hereinafter, an operation to convey the heads 10 in the left-right direction without causing the ink to be ejected from the heads 10 will be referred to as a "non-ejection scan of the heads 10".

The white flag indicates whether to perform one of the ejection scan or the non-ejection scan of the white head 3 in the formation processing (S21) to be described below. When the white flag is ON, the white flag indicates that the ejection scan of the white head 3 is to be performed. When the white flag is OFF, the white flag indicates that the non-ejection scan of the white head 3 is to be performed.

Similarly, the color flag indicates whether to perform one of the ejection scan or the non-ejection scan of the color head 4 in the formation processing (S21). The shielding flag indicates whether to perform one of the ejection scan or the non-ejection scan of the shielding head 5 in the formation processing (S21).

The CPU 91 performs the formation processing (S21). In the formation processing, the CPU 91 refers to the white flag, the color flag, and the shielding flag, and, for each of the heads 10, determines which of the ejection scan and the non-ejection scan is to be performed.

Hereinafter, the formation processing performed subsequent to processing at S16 will be referred to as "first formation processing". In the first formation processing, the white flag, the color flag, and the shielding flag are all ON as a result of the processing at S 16. Thus, in the first formation processing, the CPU 91 determines to perform the ejection scan of the white head 3, the ejection scan of the color head 4, and the ejection scan of the shielding head 5.

In the first formation processing, the CPU 91 repeats a parallel scan of the white head 3, the color head 4, and the shielding head 5, and the sub-scan of the platen 7 by the predetermined amount from the front to the rear. The parallel scan of the white head 3, the color head 4, and the shielding head 5 is an operation in which the ejection scans of each of the white head 3, the color head 4, and the shielding head 5 are performed in parallel.

In the first formation processing, the CPU 91 ejects, from the shielding head 5, the shielding ink of the shielding ink amount per execution of the formation processing calculated by the processing at S13. In other words, the CPU 91 ejects, from the shielding head 5, the shielding ink of the amount corresponding to the white ink amount.

As shown by the state ST2 in FIG. 3, by the first formation processing, the color layer L11 is formed on the film F. In the film F, the white layer L12 is formed on the color layer L11. In the film F, the shielding layer L13 is formed on the white layer L12.

The formation processing is performed in a state in which the platen 7 shown in FIG. 5 is heated by the heater 70, by the processing at S10 shown in FIG. 7. Thus, the ink layer L1 is formed on the film F placed on the platen 7 heated by the heater 70. In this way, the ink layer L1 is formed on the film F while an organic solvent contained in the ink that has landed on the film F evaporates.

As shown in FIG. 8, in the present embodiment, in the first formation processing, the CPU 91 forms the color layer L11 in the color region R1. The CPU 91 forms the white layer L12 in the white region R2. The CPU 91 forms the shielding layer L13 in the shielding region R3 determined by the processing at S15.

As shown in FIG. 7, the CPU 91 determines whether a number of times of execution of the formation processing (S21) has reached the predetermined number of times (S22). The predetermined number of times indicates a number of laminations of the unit sets formed on the film F. In other words, the unit sets are layered on the film F by a number corresponding to the number of times of execution of the formation processing.

As long as the predetermined number of times is a plurality of times, the number is not limited to a specific number. In the example shown in FIG. 3, the two unit sets are layered, and thus the predetermined number of times is two. The predetermined number of times is stored in advance in the flash memory 92. The predetermined number of times may be specified by the user via the operation portion 98.

When the number of times of execution of the formation processing has not reached the predetermined number of times (no at S22), the CPU 91 performs conveyance processing (S23). In the conveyance processing, the CPU 91 conveys the platen 7 from the rear toward the front to a return position that is not shown in the drawings. When the platen 7 is positioned at the return position, the rear end of the platen 7 is disposed further to the front than the front ends of the heads 10.

The CPU 91 turns the color flag OFF (S24). The CPU 91 turns the white flag ON (S24). The CPU 91 turns the shielding flag ON (S24). The CPU 91 shifts the processing to the processing at S21.

The CPU 91 performs the formation processing (S21). Hereinafter, the formation processing performed subsequent to the processing at S24 will be referred to as "second formation processing". In the second formation processing, the white flag and the shielding flag are ON as a result of the processing at S24. Thus, in the second formation processing, the CPU 91 determines to perform the ejection scan of the white head 3 and the ejection scan of the shielding head 5.

In the second formation processing, the color flag is OFF as a result of the processing at S24. Thus, in the second formation processing, the CPU 91 determines to perform the non-ejection scan of the color head 4.

In the second formation processing, the CPU 91 repeats the parallel scan of the white head 3 and the shielding head 5, and the sub-scan of the platen 7 by the predetermined amount from the front to the rear. The parallel scan of the white head 3 and the shielding head 5 is an operation in which the ejection scans of each of the white head 3 and the shielding head 5 are performed in parallel.

In the second formation processing, the CPU 91 ejects, from the shielding head 5, the shielding ink of the shielding ink amount per execution of the formation processing calculated by the processing at S13. In other words, the CPU 91 ejects, from the shielding head 5, the shielding ink of the amount corresponding to the white ink amount.

As shown by the state ST2 in FIG. 3, by the second formation processing, in the film F, the white layer L14 is formed on the shielding layer L13. In the film F, the shielding layer L15 is formed on the white layer L14. In other words, in the second formation processing, the unit set is further formed on the unit set formed in the first formation processing.

As shown in FIG. 8, in the present embodiment, in the second formation processing, the CPU 91 forms the white layer L14 in the white region R2. The CPU 91 forms the shielding layer L15 in the shielding region R3 determined by the processing at S15.

As shown in FIG. 7,when, in the determination at S22, the number of times of execution of the formation processing has reached the predetermined number of times (yes at S22), the CPU 91 performs discharge processing (S25). In the conveyance processing, the CPU 91 conveys the platen 7 from the rear toward the front to the front end position P11 shown in FIG. 4 and FIG. 5. The CPU 91 returns the processing to the processing at S11.

As described above, in the present embodiment, the printer 21 forms, on the film F, the ink layer L1 to be transferred to the print medium M. The color head 4 ejects the color ink. The shielding head 5 ejects the shielding ink. The color layer L11 is the ink layer L1 that is configured by the color ink and configures the color image. Each of the shielding layers L13 and L15 is the ink layer L1 configured by the shielding ink.

The CPU 91 forms the color layer L11 on the film F by ejecting the color ink onto the film F from the color head 4 (S21). In the film F on which the color layer L11 has been formed, the CPU 91 forms the shielding layers L13 and L15 by ejecting the shielding ink onto the color layer L11 from the shielding head 5 (S21).

According to the formation processing at S21, the shielding layers L13 and L15 are formed on the color layer L11 in the film F. The film F on which the ink layer L1 has been formed is progressed to the powder application process (S2) and subsequent processes, in the state in which shielding layers L13 and L15 are present on the color layer L11. In this case, according to the above-described configuration, the printer 21 contributes to effects that are mainly described as follows.

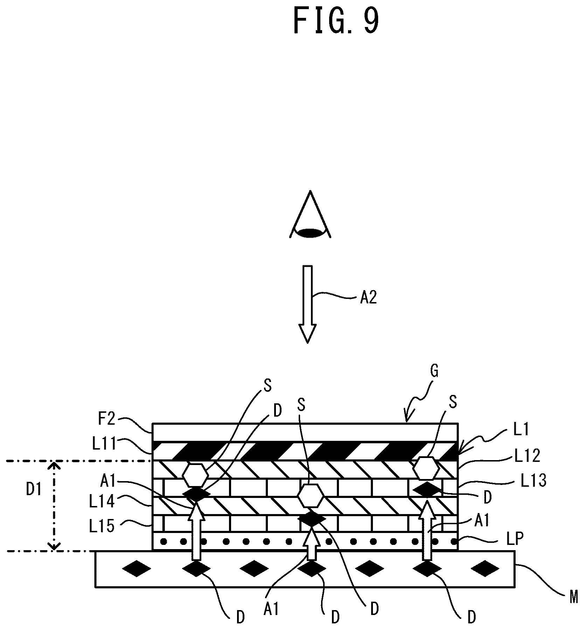

A case will be described, with reference to FIG. 9, in which the above-described film F is used, and the ink layer L1 is transferred from the film F to the print medium M in the transfer process (S4). In FIG. 9, the direction in which the ink layer L1 is formed with respect to the print medium M is assumed to be upward. In FIG. 9, a dye D is included in the print medium M. An arrow A1 indicates a state of sublimation migration of the dye D from the print medium M into the ink layer L1. An arrow A2 indicates a direction in which the user views the printed product G.

In the transfer process (S4), when the print medium M is heated, the dye D is extracted by an organic solvent S contained in the ink layer L1. As a result, the sublimation migration of the dye D from the print medium M to the ink layer L1 occurs.

When the ink layer L1 is transferred from the film F to the print medium M in the transfer process (S4), in the film F, the shielding layers L13 and L15 are present under the color layer L11. Thus, a distance D1 from the print medium M to the color layer L11 becomes longer by at least an amount corresponding to the shielding layers L13 and L15. Thus, the shielding layers L13 and L15 suppress the dye D from reaching the color layer L11 from the print medium M as a result of the sublimation migration. In this way, the shielding layers L13 and L15 suppress the dye D from being noticeable in the color layer L11. Thus, the printer 21 contributes to suppressing the deterioration in the quality of the image transferred to the print medium M.

It is assumed that the white ink is the shielding ink. In this case, saturation of the white ink is less than 1, for example. Further, the brightness of the white ink exceeds 9, for example.

Thus, when the saturation of the dye D in the print medium M is higher than the saturation of the white ink, a possibility exists that the dye D that has migrated from the print medium M to the ink layer L1 may be noticeable. When the brightness of the dye D in the print medium M is lower than the brightness of the white ink, a possibility exists that the dye D that has migrated from the print medium M to the ink layer L1 may be noticeable. In this case, the dye D that has migrated from the print medium M to the ink layer L1 is not shielded by the white-colored shielding layers L13 and L15.

On the other hand, in the above-described embodiment, the shielding ink is the ink of a color different from the white ink. In this case, the shielding layers L13 and L15 shield the dye D that has migrated from the print medium M to the ink layer L1.

In the above-described embodiment, the shielding head 5 ejects the black ink as the shielding ink. According to this configuration, the shielding layers L13 and L15 are formed by the black ink. Thus, the shielding layers L13 and L15 further suppress the dye D from being noticeable in the color layer L11. As a result, the printer 21 further contributes to suppressing the deterioration in the quality of the image transferred to the print medium M.

An issue will be described of a case in which, in the above-described embodiment, the white layer L12 is not present, for example. In this case, when the user views the printed product G from the direction indicated by the arrow A2, a possibility exists that the user can see the shielding layer L13 via the color layer L11. Thus, a possibility exists that color development of the color layer L11 may deteriorate.

In the above-described embodiment, the white head 3 ejects the white ink. The white layers L12 and L14 are the ink layer L1 configured by the white ink. The CPU 91 forms the white layer L12 in the film F by ejecting the white ink onto the color layer L11 from the white head 3 (S21). The CPU 91 forms the shielding layer L13 in the film F by ejecting the shielding ink onto the white layer L12 from the shielding head 5.

According to this configuration, the white layer L12 is present between the shielding layer L13 and the color layer L11. Thus, when the ink layer L1 is transferred from the film F to the print medium M, the white layer L12 suppresses the deterioration in the color development of the color layer L11 caused by the shielding layer L13. Thus, the printer 21 contributes to suppressing the deterioration in the quality of the image transferred to the print medium M.

In the above-described embodiment, the pair consisting of the white layer and the shielding layer that are overlaid on each other is the single unit set. The CPU 91 controls the white head 3 and the shielding head 5, and forms the plurality of unit sets on the color layer L11 in the film F (S21).

According to this configuration, the plurality of unit sets are present on the color layer L11 in the film F. When the ink layer L1 is transferred from the film F to the print medium M in the transfer process (S4), the plurality of unit sets are present under the color layer L11 in the film F, as shown in FIG. 9. Thus, the distance D1 from the print medium M to the color layer L11 becomes longer by at least an amount corresponding to the plurality of unit sets.

Thus, the plurality of unit sets suppress the dye D from reaching the color layer L11 from the print medium M as a result of the sublimation migration. In this way, the plurality of unit sets suppress the dye D from being noticeable in the color layer L11. Thus, the printer 21 further contributes to suppressing the deterioration in the quality of the image transferred to the print medium M.

In the above-described embodiment, the CPU 91 ejects, from the shielding head 5, the shielding ink of the amount corresponding to the white ink amount (S21). The white ink amount corresponds to a total value of the respective thicknesses of the white layers L12 and L14. Thus, the printer 21 contributes to changing a total value of the respective thicknesses of the shielding layers L13 and L15 in accordance with the total of the respective thicknesses of the white layers L12 and L14, for example.

In the above-described embodiment, the shielding ink amount increases the smaller the white ink amount becomes. Thus, the printer 21 contributes to securing a total value of the respective thicknesses of the white layers L12 and L14 and the shielding layers L13 and L15 to be a certain value or greater. The total of respective thicknesses of the white layers L12 and L14 and the shielding layers L13 and L15 is a thickness from the white layer L12 to the shielding layer L15. Thus, the printer 21 suppresses the dye D from reaching the color layer L11 from the print medium M as a result of the sublimation migration. In this way, the printer 21 further contributes to suppressing the deterioration in the quality of the image transferred to the print medium M.

An issue will be described of a case in which, in the above-described embodiment, the shielding layers L13 and L15 extend beyond from the projection region R4 in a plan view. In this case, when the user views the printed product G from the direction indicated by the arrow A2, a possibility exists that the user can see the shielding layers L13 and L15 via either the color layer L11 or the white layer L12. Thus, a possibility exists that the quality of the image transferred to the print medium M may deteriorate.

In the above-described embodiment, the CPU 91 ejects the shielding ink onto the shielding region R3 from the shielding head 5 (S21). The shielding region R3 is the region matching the color region R1, the region matching the white region R2, or the region inside the color region R1 or the white region R2. According to this configuration, the shielding layers L13 and L15 are suppressed from extending beyond the projection region R4 in a plan view. In other words, the shielding layers L13 and L15 are suppressed from extending beyond the color layer L11 or the white layers L12 and L14 in a plan view. Thus, the printer 21 further contributes to suppressing the deterioration in the quality of the image transferred to the print medium M.

An issue will be described of a case in which, in the above-described embodiment, it is assumed that both the ejection scan of the color head 4 and the ejection scan of the shielding head 5, and the ejection scan of the white head 3 are not performed in parallel, for example. In this case, this means that the formation process, in which one or both of the ejection scans of the color head 4 and the shielding head 5 is performed, and the formation process, in which the ejection scan of the white head 3 is performed, are performed separately. Thus, since time is required to form the ink layer L1 in the film F, a possibility exists productivity may deteriorate.

In the above-described embodiment, the CPU 91 performs the parallel scan of the white head 3, the color head 4, and the shielding head 5 in the first formation processing (S21). In the second formation processing, the CPU 91 performs the parallel scan of the white head 3 and the shielding head 5 (S21). In other words, the CPU 91 performs the ejection scan of the white head 3 in parallel with at least one of the ejection scan of the color head 4 or the ejection scan of the shielding head 5.

According to this configuration, compared to a case in which the ejection scan of the white head 3 is performed separately from both the ejection scan of the color head 4 and the ejection scan of the shielding head 5, the formation processing (S21) is performed in a shorter time. Thus, the printer 21 contributes to suppressing the deterioration in the quality of the image transferred to the print medium M while suppressing a deterioration in productivity.

In the baking process (S3), the ink layer L1 is sandwiched between the powder layer LP and the film F. Thus, the organic solvent S contained in the ink layer L1 does not easily evaporate. As described above, the organic solvent S contained in the ink layer L1 is a factor causing the sublimation migration. Thus, in the transfer process (S4), if an amount of the organic solvent S remaining in the ink layer L1 is high, an amount of the dye D moving from the print medium M to the ink layer L1 as a result of the sublimation migration increases.

In the above-described embodiment, the platen 7 includes the heater 70. The CPU 91 performs the formation processing (S21) in the state in which the heater 70 is generating heat. In the formation processing, the powder layer LP is not yet formed on the film F. Thus, the organic solvent S contained in the ink that has landed on the film F is easily evaporated by heat transmitted from the heater 70 to the film F. Thus, the ink layer L1 is formed on the film F while the organic solvent S contained in the ink that has landed on the film F is evaporated.

In this way, in the transfer process (S4), the amount of the organic solvent S remaining in the ink layer L1 is small. As a result, the amount of the dye D that moves from the print medium M to the ink layer L1 as a result of the sublimation migration is suppressed. Thus, the printer 21 further contributes to suppressing the deterioration in the quality of the image transferred to the print medium M.

In the above-described embodiment, the print medium M is an example of the "print medium" of the present invention. The ink layer L1 is an example of the "ink layer" of the present invention. The film F is an example of the "film" of the present invention. The printer 21 is an example of the "image formation device" of the present invention.

The color head 4 is an example of the "color head" of the present invention. The shielding head 5 is an example of the "shielding head" of the present invention. The CPU 91 is an example of the "processor" and "computer" of the present invention. The color layer L11 is an example of the "color layer" of the present invention. The shielding layers L13 and L15 are an example of the "shielding layer" of the present invention.

The white head 3 is an example of the "white head" of the present invention. The white layers L12 and L14 are an example of the "white layer" of the present invention. The ejection scan of the color head 4 is an example of the "color scan" of the present invention. The ejection scan of the white head 3 is an example of the "white scan" of the present invention. The ejection scan of the shielding head 5 is an example of the "shielding scan" of the present invention.

The platen 7 is an example of the "heat platen" of the present invention. The heater 70 is an example of the "heater" of the present invention.

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents. Some specific examples of potential alternatives, modifications, or variations in the described invention are provided below. The above-described embodiment and each of modified examples may be combined with each other insofar as no contradictions arise.

In the above-described embodiment, in the formation processing (S21), the CPU 91 ejects, from the shielding head 5, the shielding ink of the amount corresponding to the white ink amount. In contrast, the CPU 91 may eject, from the shielding head 5, the shielding ink of an amount corresponding to other parameters. Hereinafter, various modified examples relating to the other parameters will be described.

In the formation processing, the CPU 91 may eject, from the shielding head 5, the shielding ink of an amount corresponding to a type of the film F. In this case, the CPU 91 acquires the target data by the processing at S12, and the target data preferably indicates the type of the film F. In the processing at S13, the CPU 91 preferably determines the shielding ink amount as an amount corresponding to the type of the film F, based on the acquired target data.

The type of the film F may be determined by a material of the receiving layer F2. The type of the film F may be determined by a thickness of the receiving layer F2. The type of the film F may be determined by an amount of the ink that fixes to the receiving layer F2. The type of the film F may be determined by another factor relating to the film F.

For example, the thicker the thickness of the receiving layer F2, the greater an amount of the polyvalent metal salt contained in the receiving layer F2. The greater the amount of the polyvalent metal salt contained in the receiving layer F2, the more easily the receiving layer F2 causes the ink to coagulate. Thus, the CPU 91 may determine the shielding ink amount such that the shielding ink amount becomes larger the greater the amount of the polyvalent metal salt contained in the receiving layer F2, for example. In this way, the printer 21 contributes to forming the shielding layers L13 and L15 of a thickness suitable for the type of the film F. Note that the CPU 91 may determine the shielding ink amount such that the shielding ink amount becomes smaller the greater the amount of the polyvalent metal salt contained in the receiving layer F2.

In the formation processing, the CPU 91 may eject, from the shielding head 5, the shielding ink of an amount corresponding to a temperature set in the transfer process (S4). The temperature set in the transfer process (S4) is a heating temperature by the heat press machine 23, for example.

In the formation processing, the CPU 91 may eject, from the shielding head 5, the shielding ink of an amount corresponding to a pressure set in the transfer process (S4). The pressure set in the transfer process (S4) is a pressure applied to the film F and the print medium M by the heat press machine 23, for example.

In the formation processing, the CPU 91 may eject, from the shielding head 5, the shielding ink of an amount corresponding to a time period set in the transfer process (S4). The time period set in the transfer process (S4) is a time period over which the pressure is applied to the film F and the print medium M by the heat press machine 23, or a heating time period by the heat press machine 23, for example.

In these cases, the CPU 91 acquires the target data by the processing at S12, and the target data preferably indicates the temperature, the pressure, or the time period set in the transfer process (S4). In the processing at S13, the CPU 91 preferably determines the shielding ink amount as an amount corresponding to the temperature, the pressure, or the time period set in the transfer process (S4), based on the acquired target data.

For example, the higher the temperature set in the transfer process (S4), the more likely the sublimation migration is to occur in the transfer process (S4). The greater the pressure set in the transfer process (S4), the more likely the sublimation migration is to occur in the transfer process (S4). The longer the time period set in the transfer process (S4), the more likely the sublimation migration is to occur in the transfer process (S4).

In the processing at S13, the CPU 91 may determine the shielding ink amount such that the shielding ink amount increases the more likely the sublimation migration is to occur. In this way, the printer 21 contributes to forming the shielding layers L13 and L15 of a thickness suitable for the temperature, the pressure, or the time period in the transfer process (S4). Note that, in the processing at S13, the CPU 91 may determine the shielding ink amount such that the shielding ink amount becomes smaller the more likely the sublimation migration is to occur.

The CPU 91 may eject, from the shielding head 5, the shielding ink of an amount corresponding to a type of the print medium M. In this case, the CPU 91 acquires the target data by the processing at S12, and the target data preferably indicates the type of the print medium M. In the processing at S13, the CPU 91 preferably determines the shielding ink amount as an amount corresponding to the type of the print medium M, based on the acquired target data.

The type of the print medium M may be determined by a material of the print medium M. The type of the print medium M may be determined by a thickness of the print medium M.

The type of the print medium M may be determined by a brightness of the print medium M. The type of the print medium M may be determined by saturation of the print medium M. The type of the print medium M may be determined by a hue of the print medium M. The type of the print medium M may be determined by another factor relating to the print medium M.

For example, the lower the brightness of the print medium M, the more likely the sublimation migration is to occur in the transfer process (S4). Thus, the CPU 91 may determine the shielding ink amount such that the shielding ink amount increases the lower the brightness of the print medium M, for example. The higher the saturation of the print medium M, the more likely the sublimation migration is to occur in the transfer process (S4). Thus, the CPU 91 may determine the shielding ink amount such that the shielding ink amount increases the higher the saturation of the print medium M, for example. In this way, the printer 21 contributes to forming the shielding layers L13 and L15 of a thickness suited to the type of the print medium M.

Note that the CPU 91 may determine the shielding ink amount such that the shielding ink amount becomes smaller the lower the brightness of the print medium M, for example. The CPU 91 may determine the shielding ink amount such that the shielding ink amount becomes smaller the higher the saturation of the print medium M, for example.

In the formation processing, the CPU 91 may eject, from the shielding head 5, the shielding ink of an amount corresponding to a set value specified by the user. In this case, the user may specify the set value via the operation portion 98. For example, the user may specify the set value such that the shielding ink amount increases the higher the intended quality of the image. In this way, the printer 21 contributes to forming the shielding layers L13 and L15 corresponding to the intended quality of the image by the user, for example.

Hereinafter, modified examples other than the parameters will be described. In the above-described embodiment, in the processing at S13, the CPU 91 determines the shielding ink amount such that the shielding ink amount increases the smaller the white ink amount. In contrast, the CPU 91 may determine the shielding ink amount such that the shielding ink amount becomes smaller the smaller the white ink amount.

The shielding layers L13 and L15 may be a complementary color of the color of the print medium M. In this case, the shielding ink may be the complementary color of the color of the print medium M. The shielding ink may be configured by the color ink. In other words, the shielding ink may be changed from the black ink. When the shielding ink is configured by the color ink, the shielding layers L13 and L15 may be formed of the complementary color obtained using a plurality of the color inks.

For example, when the sublimation migration occurs in the transfer process (S4), the color of the dye D and the color of the shielding layers L13 and L15 are mixed. When the shielding layers L13 and L15 are the complementary color, the saturation and brightness of the mixed color become lower. In this way, the shielding layers L13 and L15 further suppress the dye D from being noticeable in the color layer L11. Thus, the printer 21 further contributes to suppressing the deterioration in the quality of the image transferred to the print medium M.

The plurality of heads 10 may be changed from the above-described embodiment. For example, the plurality of heads 10 may be a line head fixed to the frame of the printer 21. An arrangement order of the plurality of heads 10 in the front-rear direction may be changed from that of the above-described embodiment. The plurality of heads 10 may be arranged in the left-right direction.

A number of the plurality of heads 10 may be one, may be two, or may be four or more. For example, a case will be described in which the number of the plurality of heads 10 is four or more. When the ejection scans are performed simply using the three heads 10, namely, the white head 3, the color head 4, and the shielding head 5, this equates to the parallel scan being performed by the white head 3, the color head 4, and the shielding head 5 in the formation processing. Furthermore, even when the ejection scan of another of the heads 10 is performed in parallel in addition to the white head 3, the color head 4, and the shielding head 5, this also equates to the parallel scan being performed by the white head 3, the color head 4, and the shielding head 5 in the formation processing.

The plurality of heads 10 may omit the white head 3. In this case, the white layer L12 need not necessarily be formed on the film F.

The plurality of heads 10 may omit the shielding head 5. In this case, the color head 4 may function as the shielding head. In other words, the shielding ink may be the color ink. For example, the black ink used as the color ink may be used as the shielding ink. In this case, the single container is used as the black ink container and the shielding ink container.

The CPU 91 may form the color layer L11 and the shielding layer L13 on the film F in the order of the color layer L11 and the shielding layer L13 from the film F. Preferably, the CPU 91 forms the color layer L11, the white layer L12, and the shielding layer L13 on the film F in the order of the color layer L11, the white layer L12, and the shielding layer L13 from the film F. A formation mode of the ink layer L1 by the formation processing (S21) may be changed as appropriate as described below, for example.

In the above-described embodiment, the CPU 91 laminates the plurality of unit sets. In contrast, the CPU 91 may form the single unit set. In this case, the CPU 91 may omit the processing at S22, S23, and S24.

In the first formation processing, the CPU 91 performs the parallel scan of the white head 3, the color head 4, and the shielding head 5. In contrast, in the first formation processing, the CPU 91 may perform the parallel scan of the white head 3 and the color head 4, and perform the non-ejection scan of the shielding head 5. The parallel scan of the white head 3 and the color head 4 is an operation in which the ejection scans of each of the white head 3 and the color head 4 are performed in parallel. In this case, in the processing at S16, the CPU 91 preferably turns the shielding flag OFF. Subsequent to the first formation processing, the CPU 91 preferably performs the formation processing in a state in which the color flag and the white flag are turned OFF, and the shielding flag is turned ON.

In the first formation processing, the CPU 91 may perform the ejection scan of the color head 4, and the non-ejection scan of each of the white head 3 and the shielding head 5. In this case, in the processing at S16, the CPU 91 preferably turns the shielding flag and the white flag OFF. Subsequent to the first formation processing, the CPU 91 preferably performs the formation processing in a state in which the color flag is turned OFF, and the white flag and the shielding flag are turned ON. In this case, the sub-scan of the platen 7 by the predetermined amount is preferably performed from the front toward the rear.

Alternatively, subsequent to the first formation processing, the CPU 91 may perform the following control instead of turning the color flag OFF and turning the white flag and the shielding flag ON. In other words, the CPU 91 may perform the formation processing in a state in which the color flag and the shielding flag are turned OFF and the white flag is turned ON. Subsequently, the CPU 91 preferably performs the formation processing in a state in which the color flag and the white flag are turned OFF and the shielding flag is turned ON.

In the above-described embodiment, the shielding region R3 is the region that matches the projection region R4 or is disposed inside the projection region R4 in a plan view. In contrast, part of the shielding region R3 need not necessarily overlap the projection region R4 in a plan view. In other words, the shielding layers L13 and L15 may extend beyond any one of the white layers L12 and L14, and the color layer L11 in a plan view.

In the above-described embodiment, in the DTF printing, a transfer fluid application process may be performed instead of the powder application process (S2). In this case, the plurality of heads 10 may include a transfer head. The transfer head ejects the transfer fluid from the transfer head onto the ink layer L1 in the film F. The transfer fluid configures an adhesive layer. The adhesive layer is interposed between the ink layer L1 and the print medium M in the transfer process (S4), and improves the fixity of the ink layer L1 to the print medium M.

When the transfer fluid is used, a drying process may be performed instead of the baking process (S3). The drying process dries the transfer fluid using warm air.

In the above-described embodiment, in the DTF printing, the powder application process may be omitted. In this case, the transfer fluid application process also need not necessarily be performed. In other words, the powder layer LP need not necessarily be formed in the film F.

When the powder layer LP is not formed in the film F, for example, in the image formation process (S1), the ink layer L1 forming an uppermost layer preferably includes a component having an adhesive function. In other words, the ink forming the uppermost layer preferably includes the component having the adhesive function. The uppermost layer is the layer furthest from the film F, of the ink layer L1. For example, when the white layer is the uppermost layer, the white ink preferably includes the component having the adhesive function.

In the above-described embodiment, in the processing at S12, the CPU 91 acquires the target data from the print data. In contrast, the user may operate the operation portion 98, and may input the target data to the printer 21. The CPU 91 may acquire the target data input by the user via the operation portion 98. In this way, the acquisition method of the target data may be changed from that of the above-described embodiment.

In the above-described embodiment, the organic solvent contained in the white ink may be stronger than in the organic solvent contained in the shielding ink in terms of suppressing the dye D from moving in the layers. In this case, for example, the white ink may be further ejected on the shielding layer L15, and the white layer may be formed on the uppermost layer. According to this configuration, the white layer at the uppermost layer further contributes to suppressing the dye D from being noticeable in the ink layer L1 as a result of the sublimation migration.

In the above-described embodiment, "a second layer is formed on a first layer" does not exclude a case in which the second layer is formed on the first layer via another layer. In other words, "the second layer is formed on the first layer" includes a case in which the second layer is directly formed on the first layer, and a case in which the second layer is formed on the first layer via the other layer. For example, "the shielding layer L13 is formed on the color layer L11" may mean that the shielding layer L13 is formed on the color layer L11 via the white layer L12, as in the above-described embodiment. On the other hand, the shielding layer L13 may be directly formed on the color layer L11. Furthermore, the shielding layer L13 may be formed on the color layer L11 via a layer other than the white layer L12.

In the above-described embodiment, a specific layer may be formed between one of the unit sets and another of the unit sets. The specific layer is, for example, a color layer. In the image formation process (S1), the uppermost layer may be changed from the shielding layer. The uppermost layer may be the white layer, or may be the color layer.

When the uppermost layer is the layer other than the shielding layer, in the final formation processing (S21), the shielding flag is preferably turned OFF in the processing at S24. The final formation processing is the formation processing that is performed when, in the determination at S22, the number of times of execution of the formation processing is determined to be "the predetermined number of times - 1".

In the above-described embodiment, the heater 70 is connected to the CPU 91. In contrast, the heater 70 need not necessarily be connected to the CPU 91. In other words, the heater 70 need not necessarily be controlled by the CPU 91. In this case, for example, the user preferably turns on a power source of the heater 70 and causes the heater 70 to generate heat before performing the print start operation.

In the above-described embodiment, a timing at which the CPU 91 causes the heater 70 to generate heat is not limited to being before the print command is received. The CPU 91 may cause the heater 70 to generate heat after receiving the print command. The CPU 91 preferably raises the temperature of the heater 70 to a set heat generation temperature in a period before the formation processing (S21).

In the above-described embodiment, the platen 7 may omit the heater 70. In other words, the platen 7 need not necessarily be the heat platen.

In place of the CPU 91, a microcomputer, application specific integrated circuits (ASICs), a field programmable gate array (FPGA) may be used as a processor. The main processing may be performed as distributed processing by a plurality of the processors.

It is sufficient that the non-transitory storage media, such as the flash memory 92, be a storage medium capable of storing information, regardless of a period of storing the information. The non-transitory storage medium need not necessarily include a transitory storage medium (a transmitted signal, for example). The control program may be downloaded from a server connected to a network (not shown in the drawings), in other words, may be transmitted as transmission signals, and may be stored in the flash memory 92. In this case, the control program may be stored in a non-transitory storage medium, such as an HDD of the server.

## Claims

1. An image formation device (21) configured to form an ink layer (L1) on a film (F), the ink layer being configured to be transferred to a print medium (M), the image formation device comprising:
a color head (4) configured to eject color ink;
a shielding head (5) configured to eject shielding ink; and
a processor (91), wherein
the processor is configured to form a color layer (L11) on the film by ejecting the color ink from the color head onto the film, the color layer being the ink layer configured by the color ink and constituting an image, and
the processor is configured to form a shielding layer (L13, L15) by ejecting the shielding ink from the shielding head onto the color layer, in the film on which the color layer is formed, the shielding layer being the ink layer configured by the shielding ink.

2. The image formation device according to claim 1, wherein
the shielding head is configured to eject black ink as the shielding ink.

3. The image formation device according to claim 1, comprising:
a white head (3) configured to eject white ink, wherein
the processor is configured to form a white layer (L12, L14) by ejecting the white ink from the white head onto the color layer, in the film on which the color layer is formed, the white layer being the ink layer configured by the white ink, and
the processor is configured to form the shielding layer by ejecting the shielding ink from the shielding head onto the white layer, in the film on which the white layer is formed.

4. The image formation device according to claim 3, wherein
the processor is configured to control the white head and the shielding head, and, in the film on which the color layer is formed, form a plurality of unit sets on the color layer, a single unit set of the plurality of unit sets being a set of the white layer and the shielding layer.

5. The image formation device according to claim 3, wherein
the processor is configured to eject, from the shielding head, the shielding ink of an amount corresponding to an amount of the white ink ejected by the white head.

6. The image formation device according to claim 1, wherein
the processor is configured to eject, from the shielding head, the shielding ink of an amount corresponding to a type of the film.

7. The image formation device according to claim 1, wherein
the processor is configured to eject, from the shielding head, the shielding ink of an amount corresponding to a temperature, a pressure, or a time period set in a transfer process (S4), the transfer process being a process of transferring the image from the film to the print medium.

8. The image formation device according to claim 1, wherein
the processor is configured to eject, from the shielding head, the shielding ink of an amount corresponding to a type of the print medium onto which the image is to be transferred from the film.

9. The image formation device according to claim 1, wherein
the processor is configured to eject, from the shielding head, the shielding ink of an amount corresponding to a set value specified by a user.

10. The image formation device according to claim 3, wherein
the processor is configured to eject the shielding ink from the shielding head onto a region matching a color region formed by the color layer, a region matching a white region formed by the white layer, or a region inside either one of the color region or the white region.

11. The image formation device according to claim 1, wherein
in the film in which the color layer is formed, the processor is configured to form the shielding layer by ejecting the shielding ink from the shielding head onto the color layer, the shielding layer being a complementary color of a color of the print medium onto which the image is to be transferred from the film.

12. The image formation device according to claim 3, wherein
the processor is configured to perform
a color scan of scanning while ejecting the color ink from the color head and a white scan of scanning while ejecting the white ink from the white head in parallel with each other,
a shielding scan of scanning while ejecting the shielding ink from the shielding head and the white scan in parallel with each other, or
the color scan, the shielding scan, and the white scan in parallel with each other.

13. The image formation device according to claim 1, comprising:
a heat platen (7) configured to have the film placed thereon, the heat platen including a heater (70), wherein
the processor is configured to form the color layer on the film by ejecting the color ink from the color head, onto the film placed on the heat platen heated by the heater, and
the processor is configured to form the shielding layer by ejecting the shielding ink from the shielding head onto the color layer, in the film which is placed on the heat platen heated by the heater and on which the color layer is formed.

14. An image formation method for forming an ink layer (L1) on a film (F), the ink layer being configured to be transferred to a print medium (M), the image formation method comprising:
forming a color layer (L11) on the film by ejecting color ink from a color head onto the film, the color head being configured to eject the color ink, the color layer being the ink layer configured by the color ink and constituting an image, and
forming a shielding layer (L13, L15) by ejecting shielding ink from a shielding head onto the color layer, in the film on which the color layer is formed, the shielding head being configured to eject the shielding ink, the shielding layer being the ink layer configured by the shielding ink.

15. An image formation program for forming an ink layer (L1) on a film (F), the ink layer being configured to be transferred to a print medium (M), the image formation program, when executed by a computer (91), causing the computer to perform processes comprising:
forming a color layer (L11) on the film by ejecting color ink from a color head onto the film, the color head being configured to eject the color ink, the color layer being the ink layer configured by the color ink and constituting an image, and
forming a shielding layer (L13, L15) by ejecting shielding ink from a shielding head onto the color layer, in the film on which the color layer is formed, the shielding head being configured to eject the shielding ink, the shielding layer being the ink layer configured by the shielding ink.
